# EUROPEAN PATENT SPECIFICATION

(11) **EP 3 325 428 B1**
(45) Date of publication and mention of the grant of the patent: **04.09.2019**
(21) Application number: 16751398.5
(22) Date of filing: 21.07.2016
(51) Int. Cl.: C04B 38/00, B33Y 80/00, B28B 7/34, B28B 1/30, B01D 39/20

(54) **CERAMIC FILTER AND METHOD FOR FORMING THE FILTER**
KERAMISCHER FILTER UND VERFAHREN ZUR HERSTELLUNG DES FILTERS
FILTRE CÉRAMIQUE ET PROCÉDÉ DE FORMATION DU FILTRE

(30) Priority: 22.07.2015 US 201562195372 P
(43) Date of publication of application: 30.05.2018
(73) Proprietor: ASK Chemicals LLC, Wilmington, DE 19801 (US)
(72) Inventor: GAGE, Robert, Alan, Rushville, NY 14544 (US); WILLIS, Bradley, Thomas, Honeoye, NY 14471 (US); NORRIS, David, Andrew, Almond, NY 14804 (US); FORSYTHE, Shannon, Frederick, Hornell, NY 14843 (US); KROKER, Jorg, Powell, OH 43065 (US)
(74) Representative: Müller Schupfner & Partner Patent- und Rechtsanwaltspartnerschaft mbB
(86) International application number: PCT/US2016/043391
(87) International publication number: WO 2017/015489

(56) References cited:
- EP-A1- 0 963 834
- WO-A1-99/22861
- WO-A1-2014/150503
- US-A1- 2012 273 239

## Description

### Technical Field

The disclosed embodiments relate to a method for preparing a filter medium, especially from a ceramic material, and especially using three-dimensional printing technology. Such a filter is useful for filtering dross, inclusions and the like from molten metal in a casting process. This application is also directed to the filter formed by the method.

### Background

When pouring a molten metal, some impurities in the metal will remain in a solid state. Some of these impurities will be oxides of the metal that are formed by exposure of the molten metal to atmospheric oxygen. It is common to use a ceramic filter to remove these, due to the temperature of the metal being handled and because of the affinity exhibited by oxide-based impurities to adhere to ceramic material. The reactive nature of aluminum and aluminum alloys make them particularly likely to form the undesired oxides, requiring filtration.

Ceramic filters are also useful in filtering water. However, the techniques useful for forming ceramic powders into water filters, such as sintering ceramic powders, are not useful in manufacturing filters for molten metals, as the water filters are intended to remove materials at the micron level, rather than at the much larger flow area required to pass the molten metal quickly, to preserve it in a molten state.

An example of recent work in this field is insightful, although it appears that significant problems still exist for solution. In US 8,794,298 to Schlienger, the need to provide a ceramic filter with the complex paths desired for good filtration is described. The inventors there indicate that in the prior art it was known to infiltrate spheres of foamed polystyrene with a ceramic slurry. When the slurry was fired, the polystyrene would burn out, leaving a network of randomly-directed ligaments that supported a tortuous flow path of pores previously occupied by the spheres. The deficiency of this technique is that the close proximity of some of the spheres presented fragile ligaments that could break off in use, actually causing the filter to be a source of inclusions.

Another technique described as inadequate by the '298 patent was a packed bed of ceramic or polymeric particles in which the interstices would provide the path, albeit a path essentially lacking in pores. This solution leaves an undesirably high percentage of the filter volume occupied by the particles. The solution taught in the '298 patent is to provide a three-dimensional "engineered and electronically-defined geometry" in which pore size, tortuosity and the minimum diameter of the ligaments is predetermined, although none of these details are provided. Using the three-dimensional predetermined geometry as a template, the '298 patent describes using a stereolithography technique to form the reticulated network by selective laser activation of a resin that contains the ceramic material and is photopolymerizable. The polymer-ceramic composite network is then reduced to ceramic by known techniques, including burnout.

A somewhat earlier technique for preparing a ceramic filter element having a three-dimensional reticulated skeleton structure having interconnected pores is to impregnate with ceramic slurry a reticulated synthetic resin foam having no cell membranes, as taught in US 6,203,593 to Tanuma. In each case in the '593 patent, the reticulated resin foam is formed into a cylindrical shape prior to the impregnation with ceramic, so that all of the ceramic filter elements provided have an unimpeded axial flow path and any filtering activity occurs by flow in the radial direction of the cylindrical element. This would suggest that there is a great amount of difficulty in achieving penetration of the ceramic slurry into the reticulated polymer foam.

Document WO 2014/150503 discloses additively manufactured filters which may be formed of a ceramic and configured to filter molten metal. This ceramic filters may include a plurality of pores or openings arranged between an inlet surface and an outlet surface of a single unit of ceramic. The pores may be dodecahedral shaped units having a fluid inlet and/or fluid outlet arranged in each face of the dodecahedral pores.

It is therefore an unmet advantage of the prior art to provide a ceramic filter element for removing impurities in a molten metal pour, where the filter element has a proper balance of tortuosity and structural stability.

### Summary

This and other unmet advantages are provided by the device and method described and shown in more detail below.

Some of the unmet advantages are met by a precursor for a device for filtering molten metal. The device has at least two layers of filter element, each layer of filter element comprising a plurality of three-dimensional geometric cages joined in fixed relationship to each other:

Each layer of the filter precursor further comprises a peripheral member that encompasses the layer and a plurality of spacer members that span the peripheral members of a pair of adjacent layers, holding the layers in fixed spaced-apart relationship

In some embodiments, the layers are held in spaced-apart fixed relationship by joining a plurality of the three-dimensional geometric cages in one layer with a three-dimensional geometric cage in an adjacent layer.

In many of the filter precursors, each of the three-dimensional geometric cages will comprise a plurality of linear segments of a material joined to each other in the shape of a geometric solid, such that each linear segment represents an edge of the geometric solid.

In particular, each of the three-dimensional geometric cages may comprise twenty linear segments of a material arranged in the shape of a partially-truncated octahedron. Such a shape has a top and a bottom square face and eight trapezoidal faces, the longest edges of the trapezoidal faces defining an equator between the top and bottom square faces. The equator has four edges and four vertices.

When the partially-truncated octahedron shape is used, there may also be a plurality of linear support members, arranged in parallel relationship across the layer and subdividing the layer into a plurality of rows. Between each pair of adjacent linear support members, that is, in each row, a plurality of the cages having the shape of a partially-truncated octahedron are joined at the equator to each of the linear support members defining the row.

In this arrangement, the cages having the shape of a partially-truncated octahedron can be arranged along each row in spaced-apart relationship from each of the adjacent cages. However, in other embodiments, the cages can be arranged along each row, joined to each of the cages adjacent thereto.

In another embodiment, each of the three-dimensional geometric cages can comprise thirty-six linear segments of a material arranged in the shape of a fully-truncated octahedron having six square faces and eight hexagonal faces. In such case, each of the fully-truncated octahedron cages can be joined to adjacent fully-truncated octahedron cages in an edge-to-edge manner, or alternatively, each of the fully-truncated octahedron cages can be joined to adjacent fully-truncated octahedron cages in a face-to-face manner, based upon square faces of the respective cages.

The filter precursor of the inventive concept is preferably formed from a thermoplastic material suitable for extrusion through a print head of a 3-dimensional printer or a ceramic in a slurry form suitable for extrusion through a print head of a 3-dimensional printer. In the case of a thermoplastic, a preferred material is an acrylonitrile-butadiene-styrene (ABS) polymer.

In the latter case, the precursor is converted into a filter by coating the precursor with a ceramic slurry and calcined.

One method for doing this is to generate, on a computing device, a three-dimensional model of a filter precursor according to claim 1. This model may be implemented as an instruction set on a three-dimensional printer. The instruction set is then useful for constructing, using the three-dimensional printer, the filter precursor by depositing a material in a layer by layer process according to the instruction set and, especially if the material used is a polymer, coating the constructed filter precursor with a ceramic slurry and calcining the coated filter precursor.

When the material used is a ceramic, simply calcining the precursor to provide a filter of refractory material may be sufficient, but coating may be useful to increase tortuosity of the filter.

### Brief Description of the Drawings

A better understanding of the disclosed embodiments will be obtained from a reading of the following detailed description and the accompanying drawings wherein identical reference characters refer to identical parts and in which:
**FIG. 1** is a top perspective view of a filter element template;
**FIG. 2** is a top perspective view of the template of Fig. 1, after being coated with a ceramic slurry and calcined;
**FIG. 3A** is a front perspective view of a geometrical octahedron, having truncated polar vertices;
**FIG. 3B** is a front perspective view of a geometrical octahedron, having all vertices truncated;
**FIG. 4** is a top plan view of a portion of a layer of the template of Fig.1;
**FIG. 5** is a top plan view of a portion of a first alternative layer of the Fig. 1 template; and
**Fig. 6** is a perspective view of a portion of a second alternative layer of the Fig. 1 template.

### Detailed Description

The development of three-dimensional printing techniques allows the precise build-up of models in a layer plastic deposition (LPD) technology. One manufacturer of a three-dimensional printer is Zortrax, of Poland. In a typical Zortrax printing device, a filament of polymeric resin, such as an acrylonitrile-butadiene-styrene (ABS) copolymer, is fed through an extruder at the end of a robotically-controlled arm onto a heated platform in a precise manner, building up a structure according to a predetermined model in a layer by layer manner.

The three-dimensional printing may be achieved using other known technologies, provided that there is a computer model of the object to be "printed." It is understood that since 2010, the American Society for Testing and Materials (ASTM) has developed a set of standards that classify so-called "additive manufacturing technologies" into seven categories. They are: 1) vat photopolymerization; 2) material jetting; 3) binder jetting; 4) material extrusion; 5) powder bed fusion; 6) sheet lamination; and 7) directed energy deposition.

In vat photopolymerization, a container of liquid photopolymer resin is selectively hardened or cured by a light source, typically a laser. The most common technology of this type uses an ultraviolet light source in a process referred to as stereolithography, or SLA. Other techniques in this category are continuous liquid interface production, or CLIP, film transfer imaging and solid ground curing.

Material jetting applies droplets of material through a small diameter nozzle in a manner that is analogous to ink-jet printing, but applied in a layer-by-layer manner and hardened by UV light. A provider of this technology is Stratasys.

Binder jetting uses two materials. A powder base material is spread in equal layers in a build chamber. Liquid binder, applied through jet nozzles, "glues" the base material into the shape of the desired object. Once completed, the excess base powder is cleaned off of the printed item, which is cured, usually by light. A typical base powder may be a metal powder. A provider of this technology is ExOne.

The most commonly used method of material extrusion is fused deposition modelling, or FDM. A plastic filament or metal wire is run through an extrusion nozzle which can turn the flow on and off. The nozzle is moved in three-dimensions by the computer model above a table on which the object is built. The primary plastics used are acrylonitrile-butadiene-styrene (ABS) or polylactic acid (PLA). The term FDM is a registered trademark of Stratasys, so the term "fused filament fabrication" or FFF is often used instead.

Powder bed fusion is exemplified by its most common technique, which is selective laser sintering, or SLS. Here, a high power laser fuses small particles of a selected material, layer by layer, into a three-dimensional shape. Clearly, the laser is directed by the computer model of the object to be printed. Exemplary particles may be plastic, metal, ceramic or glass.

In sheet lamination, material in sheets is bound together with external force. The sheets can be metal, paper or a polymer. Metal sheets can be bound by ultrasonic welding and then CNC milled. Paper sheets would typically be glued with an adhesive. A leading company in this technology is Mcor Technologies.

The last of the categories is directed energy deposition. Here, a multi-axis robotic arm directs a nozzle that deposits metal powder or wire on a surface, where an energy source melts it. An exemplary energy source could include laser, electron beam or plasma arc. A company in this technology is Sciaky.

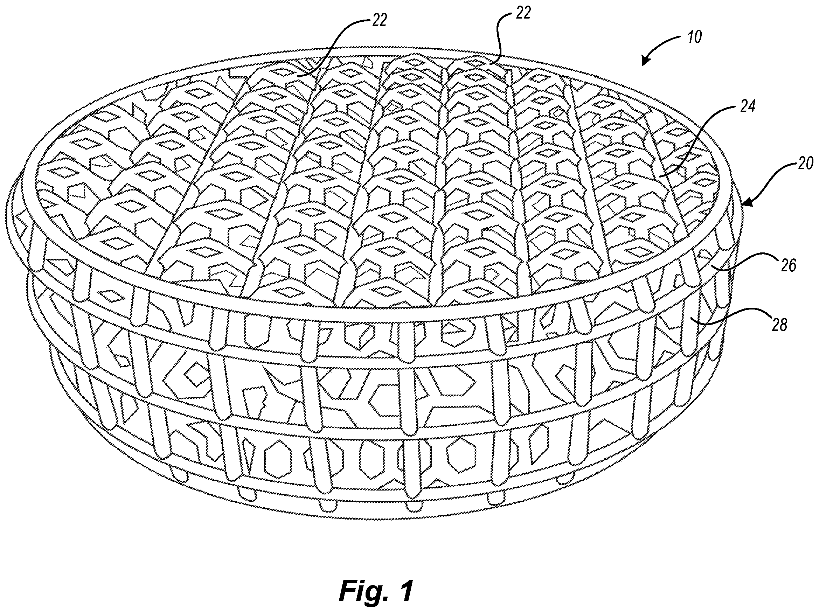

**FIG. 1** depicts a top perspective view of an assembled template **10** for making an embodiment of a ceramic filter that incorporates the inventive concept. A typical embodiment of the assembled template comprises two of more layers **20** of three-dimensional geometric cages **22** that are arranged in a fixed predetermined relationship to each other. As will be explained in more detail below, each layer **20** will have the individual cages **22** held in place by being joined to adjacent individual cages **22,** a support member **24,** a peripheral member **26** or some combination of these. Generally, each three-dimensional geometric cage **22** comprises a plurality of linear segments of a polymer, or, in some cases, a ceramic material. The ceramic material, when used, would be one that is capable of being extruded from a print head, especially a print head of a three-dimensional printer. In a three-dimensional printing method, the template **10** can be built up such that adjacent layers **20** are directly joined to each other, but this is not viewed as a critical aspect of the inventive concept, so individual layers can be built up and then joined to adjacent layers by a separate process or method. The template **10** has layers **20** that are bounded by a circular peripheral member **26.** The individual peripheral members **26** are joined in spaced relationship by spacer members **28.** In the depicted embodiment, all structural elements, that is, the cages **22,** the support members **24,** the peripheral members **26** and the spacer members **28** comprise the same material, whether that is polymer or ceramic.

While Fig. 1 discloses one specific embodiment of the layer **20** used in the template **10,** there are clearly alternative embodiments of the layer **20** known to be useful for the inventive concept. For that reason, a more detailed description of some of these embodiments are described in more detail below.

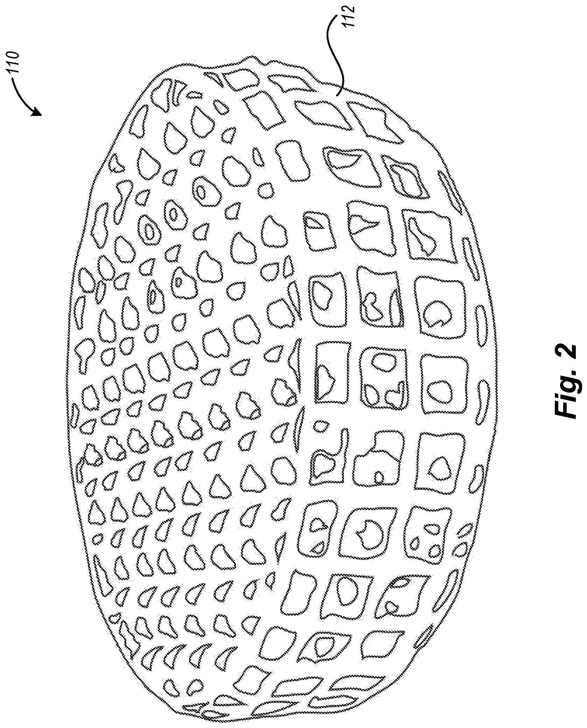

Attention is now directed to **Fig. 2****,** which depicts, in the same front perspective view as Fig. 1, a completed filter **110** that has been produced from the Fig. 1 template. This completion of the filter **110** is necessary when the template is constructed of polymer and is desirable, but not necessary, when the template is constructed of a ceramic material. To transform the template into the completed filter **110,** the template is coated with a ceramic slurry and then calcined, resulting in an overall random, but generally continuous, surface **112** of a ceramic material suitable for exposure to molten metal as a filter. The advantage provided by such a coating with ceramic slurry is that the ceramic applied from the slurry increases the closed volume in the filter and also introduces a significant amount of randomness to the otherwise regular structure, providing a higher degree of tortuosity to the product. In some instances, the ceramic slurry will effectively close the hexagonal and square "windows" that are present in the three-dimensional geometric cages.

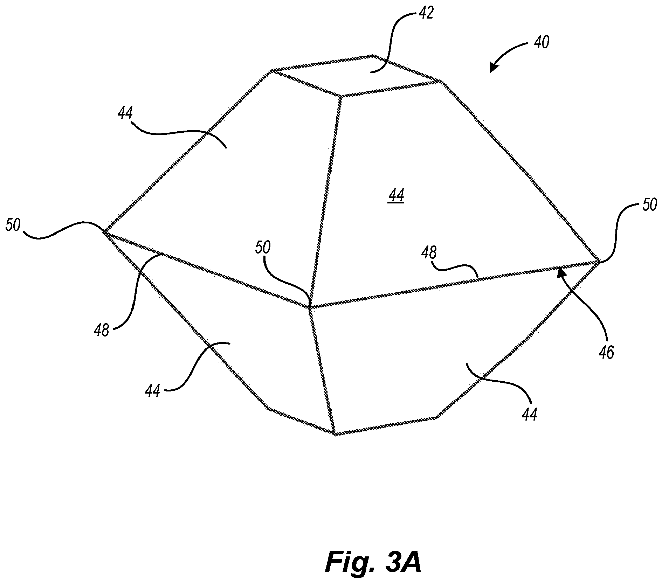

To this point, reference has been made to the use of "three-dimensional geometric cages" as a structural element in the filters embodying the inventive concept. In general, the three-dimensional geometric cages that work will tend to be frames or cages having the shape of a regular polyhedron. A particularly useful such regular polyhedron is an octahedron or a structure derived from an octahedron. As is well known, an octahedron is one of the Platonic solids that has 12 edges, 6 vertices that are disposed in three opposing pairs, the pairs in orthogonal relationship to the other pairs. There are 8 faces, each of which is an equilateral triangle. If one opposing pair of the vertices are truncated, a solid, such as is shown in perspective view in Fig. 3A, obtains. This structure **40,** which will be referred to as a "partially-truncated octahedron," has a top and a bottom square face **42** (only one of which is visible in Fig 3A) and eight trapezoidal faces **44** (four of which are visible in Fig 3A). It has an "equator" **46,** defined by the four edges **48** that do not intersect either square face **42.** The four vertices **50** that remain after the truncation are located on the equator **46.**

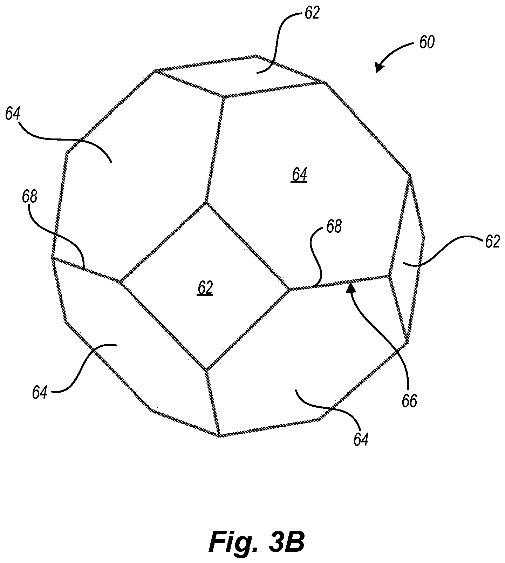

If the four remaining vertices **50** of the partially truncated octahedron **40** are truncated, the structure **60,** shown in perspective view in Fig. 3B, obtains. This structure **60** will be referred to as a "fully truncated octahedron." It has fourteen faces, six being square faces **62** (three of which are visible in Fig 3B) and eight being hexagonal faces **64** (four of which are visible in Fig 3B). There are a total of 36 edges **68** of the same length, with the edges meeting in a total of 24 vertices. The six square faces 62 are arranged in three pairs of opposing square faces. Based upon any of these pairs, an "equator" **66** is defined by four edges **68** that are parallel to a plane defined by the pair of square faces. The fully-truncated octahedron is a "space-filling" solid that can tessellate a three-dimensional space.

It will be understood that other geometric cages, built up from linear segments that define the edges of a geometric solid, may be useful, typically up to and including the icosahedron with its 20 equilateral triangle faces. While it is possible to construct and use more complex structures with more edges and vertices, the incremental benefit from increased filtration capability is greatly diminished.

Also, while it is believed to be preferred to use identical three-dimensional geometrical cages in a given layer, it is possible and may be advantageous in some circumstances to use three-dimensional geometric cages of differing sizes or shapes within a given layer, or to alter sizes or shapes between adjacent layers.

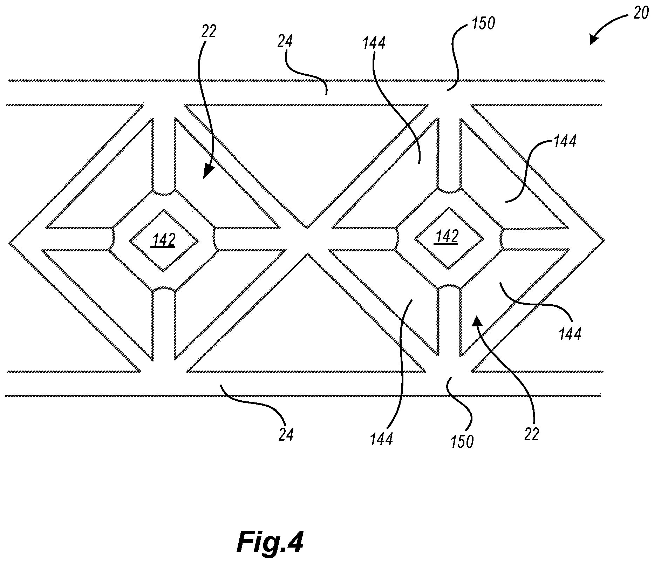

With those definitions in place, attention is now directed to Fig. 4, where a top plan view of a section of the layer **20** depicted in Fig. 1 is illustrated in an enlarged view that allows the details to be better understood. In this case, each cage **22** is formed, as an open frame of linear segments that are in the positions of the edges of the partially truncated octahedron of Fig 3A. A square face **142** is clearly seen, as are four of the trapezoidal faces **144.** Two vertices **150** of each cage **22** are joined to support members **24** and the remaining two vertices are joined to a vertex of an adjacent cage. In variations of this design, the cages **22** could be spaced further apart along the support members **24** so that adjacent cages **22** are not in contact with each other. This allows flexibility in terms of porosity and/or tortuosity. Beyond spacing, the support members **24** allow adjacent rows of cages **22** to be arranged in either a square or a triangular pitch.

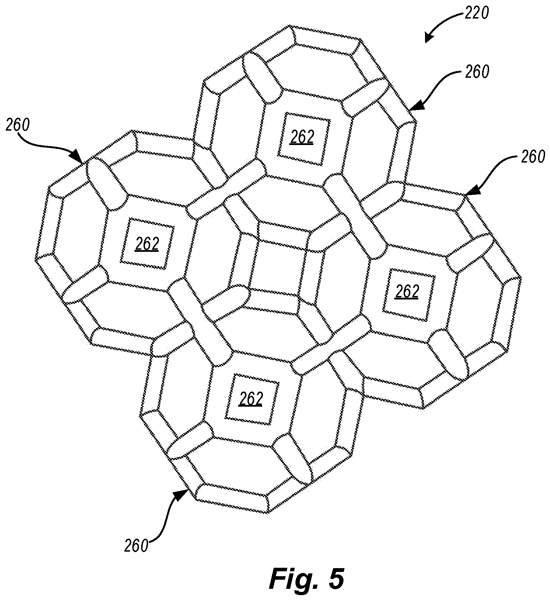

Fig. 5 shows, in top plan view, a different arrangement to provide a layer **220** for a device **10** as in Fig. 1. In this situation, the layer **220** comprises cages **260** that are linear elements shaped in the manner of a fully truncated octahedron, with adjacent cages **260** joined along adjacent edges that define the equator of the cage with reference to the top square face **262.** Again, the depiction is only a section of the layer, but illustrates how the layer can be fully built into an essentially planar sheet that can be contained with a peripheral member. This layer **220** can be directly attached to an adjacent layer **220** above or below it by joining the square faces **262,** or the layers can be spaced, as in Fig 1., by spacer members.

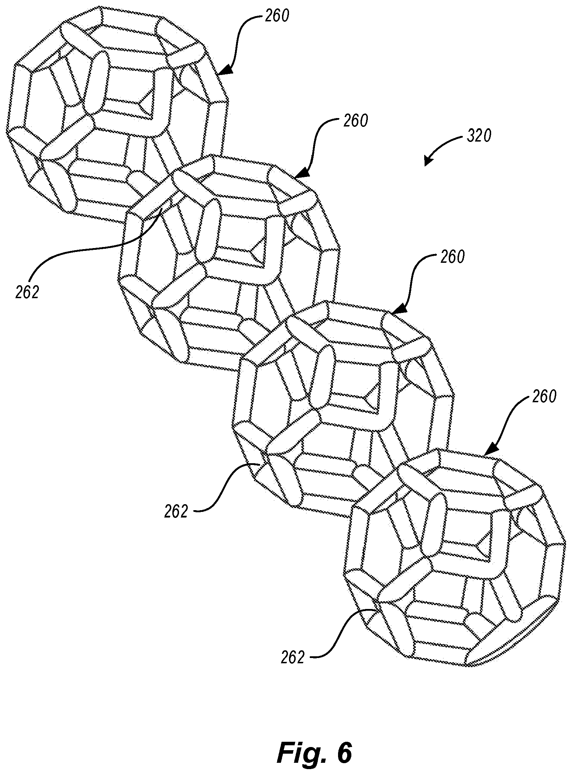

Directing attention to Fig. 6, a further manner of arranging cages **260** is shown in perspective view. Rather than "edge to edge" joining, these cages **260** are matched "face to face," using a pair of facing square faces **262.** This provides another embodiment **320** of a layer, which is, for ease of understanding, presented only in a small section.

In some situations, it may be advantageous to change the diameter of the linear segments of polymer or ceramic that are used to construct the cages, to vary porosity of the filter being assembled.

Once a basic structure for a filter is determined, a computer model can be written that allows construction of the template using a three-dimensional printing technique and device.

## Claims

1. A precursor (10) for a device for filtering, comprising:
at least two layers (20) of filter element, each layer (20) of filter element comprising a plurality of three-dimensional geometric cages (22) joined in fixed relationship to each other, wherein each layer (20) further comprises a peripheral member (26) that encompasses the layer; and
a plurality of spacer members (28) that span the peripheral members of a pair of adjacent layers, holding the layers in fixed spaced-apart relationship.

2. The filter precursor (10) of Claim 1, wherein a plurality of the three-dimensional geometric cages (22) of a pair of adjacent layers are joined in fixed relationship to each other, holding the layers in fixed spaced-apart relationship.

3. The filter precursor (10) of any one of the preceding Claims, wherein each of the three-dimensional geometric cages comprise a plurality of linear segments of a material joined to each other in the shape of a geometric solid, such that each linear segment represents an edge of the geometric solid.

4. The filter precursor (10) of Claim 3, wherein each of the three-dimensional geometric cages comprises twenty linear segments of a material arranged in the shape of a partially-truncated octahedron having a top and a bottom square face and eight trapezoidal faces, the longest edges of the trapezoidal faces defining an equator between the top and bottom square faces, the equator having four edges and four vertices.

5. The filter precursor (10) of Claim 4, further comprising
a plurality of linear support members (24), arranged in parallel relationship across the layer and subdividing the layer into a plurality of rows; such that, between each pair of adjacent linear support members, a plurality of the cages having the shape of a partially-truncated octahedron in each row are joined at the equator to each of the linear support members defining the row.

6. The filter precursor of Claim 5, wherein the cages having the shape of a partially-truncated octahedron arranged along each row are in spaced-apart relationship from each of the adjacent cages.

7. The filter precursor of Claim 5, wherein the cages having the shape of a partially-truncated octahedron arranged along each row are joined to each of the cages adjacent thereto.

8. The filter precursor of Claim 3, wherein each of the three-dimensional geometric cages comprises thirty-six linear segments of a material arranged in the shape of a fully-truncated octahedron having six square faces and eight hexagonal faces.

9. The filter precursor of Claim 8, wherein each of the fully-truncated octahedron cages are joined to adjacent fully-truncated octahedron cages in an edge-to-edge manner.

10. The filter precursor of Claim 8, wherein each of the fully-truncated octahedron cages are joined to adjacent fully-truncated octahedron cages in a face-to-face manner, based upon square faces of the respective cages.

11. The filter precursor of any one of Claims 4 to 10, wherein the material is a thermoplastic polymer suitable for extrusion through a print head of a 3-dimensional printer.

12. The filter precursor of any one of Claims 4 to 10, wherein the material is a ceramic in a slurry form suitable for extrusion through a print head of a 3-dimensional printer.

13. The filter precursor of Claim 11, wherein the polymer is an acrylonitrile-butadiene-styrene (ABS) polymer.

14. A filter for filtering a molten metal, comprising:
a filter precursor according to Claim 1 that has been coated with a ceramic slurry and calcined.

15. A method for manufacturing a filter (110) for filtering a molten metal, comprising the steps of:
generating, on a computing device, a three-dimensional model of a filter precursor according to Claim 1 and implementing the three-dimensional model as an instruction set on a three-dimensional printer;
constructing, using the three-dimensional printer, the filter precursor (10) by depositing a material in a layer by layer process according to the instruction set;
coating the constructed filter precursor with a ceramic slurry; and calcining the coated filter precursor.

## Patentansprüche

1. Vorstufe (10) für eine Vorrichtung zum Filtern, umfassend:
mindestens zwei Schichten (20) eines Filterelements, wobei jede Schicht (20) des Filterelements eine Mehrzahl von dreidimensionalen geometrischen Käfigen (22) umfasst, die in einer festen Beziehung miteinander verbunden sind, wobei jede Schicht (20) weiterhin ein peripheres Element (26) umfasst, das die Schicht umschließt; und
eine Mehrzahl von Abstandshalterelementen (28), die die peripheren Elemente eines Paars benachbarter Schichten aufspannen, wodurch die Schichten in einer festen, beabstandeten Beziehung gehalten werden.

2. Filter-Vorstufe (10) nach Anspruch 1, wobei eine Mehrzahl der dreidimensionalen geometrischen Käfige (22) eines Paars benachbarter Schichten in einer festen Beziehung miteinander verbunden sind, wobei die Schichten in einer festen, beabstandeten Beziehung gehalten werden.

3. Filter-Vorstufe (10) nach einem der vorangehenden Ansprüche, wobei jeder der dreidimensionalen geometrischen Käfige eine Mehrzahl von linearen Segmenten aus einem Material umfasst, die in der Form eines geometrischen Festkörpers so miteinander verbunden sind, dass jedes lineare Segment eine Kante des geometrischen Festkörpers darstellt.

4. Filter-Vorstufe (10) nach Anspruch 3, wobei jeder der dreidimensionalen geometrischen Käfige 20 lineare Segmente aus einem Material umfasst, die in der Form eines teilweise abgestumpften Oktaeders, das eine obere quadratische und eine untere quadratische Fläche und acht trapezförmige Flächen aufweist, angeordnet sind, wobei die längsten Kanten der trapezförmigen Flächen einen Äquator zwischen der oberen und unteren quadratischen Fläche definieren, wobei der Äquator vier Kanten und vier Ecken aufweist.

5. Filter-Vorstufe (10) nach Anspruch 4, weiterhin umfassend:
eine Mehrzahl von linearen Stützelementen (24), die in paralleler Beziehung über die Schicht angeordnet sind und die Schicht in eine Mehrzahl von Reihen unterteilen; sodass, zwischen jedem Paar benachbarter linearer Stützelemente, eine Mehrzahl von Käfigen, die die Form eines teilweise abgestumpften Oktaeders aufweisen, in jeder Reihe an dem Äquator mit jedem der linearen Stützelemente, die die Reihe definieren, verbunden ist.

6. Filter-Vorstufe nach Anspruch 5, wobei die Käfige, die die Form eines teilweise abgestumpften Oktaeders aufweisen, entlang jeder Reihe in einer beabstandeten Beziehung zu jedem der benachbarten Käfige angeordnet sind.

7. Filter-Vorstufe nach Anspruch 5, wobei die entlang jeder Reihe angeordneten Käfige, die die Form eines teilweise abgestumpften Oktaeders aufweisen, mit jedem der dazu benachbarten Käfige verbunden sind.

8. Filter-Vorstufe nach Anspruch 3, wobei jeder der dreidimensionalen geometrischen Käfige 36 lineare Segmente aus einem Material umfasst, die in der Form eines vollständig abgestumpften Oktaeders, das sechs quadratische Flächen und acht hexagonale Flächen aufweist, angeordnet sind.

9. Filter-Vorstufe nach Anspruch 8, wobei jeder der Käfige in der Form eines vollständig abgestumpften Oktaeders mit benachbarten Käfigen in der Form eines vollständig abgestumpften Oktaeders Kante an Kante verbunden ist.

10. Filter-Vorstufe nach Anspruch 8, wobei jeder der Käfige in der Form eines vollständig abgestumpften Oktaeders mit benachbarten Käfigen in der Form eines vollständig abgestumpften Oktaeders Fläche an Fläche, basierend auf den quadratischen Flächen der jeweiligen Käfige, verbunden ist.

11. Filter-Vorstufe nach einem der Ansprüche 4 bis 10, wobei das Material ein thermoplastisches Polymer ist, das für die Extrusion durch einen Druckkopf eines dreidimensionalen Druckers geeignet ist.

12. Filter-Vorstufe nach einem der Ansprüche 4 bis 10, wobei das Material eine Keramik in Form einer Aufschlämmung ist, die für die Extrusion durch einen Druckkopf eines dreidimensionalen Druckers geeignet ist.

13. Filter-Vorstufe nach Anspruch 11, wobei das Polymer ein Acrylnitril-Butadien-Styrol-Polymer (ABS) ist.

14. Filter zum Filtern einer Metallschmelze, umfassend:
eine Filter-Vorstufe nach Anspruch 1, die mit einer keramischen Aufschlämmung beschichtet und kalziniert worden ist.

15. Verfahren zur Herstellung eines Filters (110) zum Filtern einer Metallschmelze, umfassend die folgenden Schritte:
Erzeugen, auf einer Computervorrichtung, eines dreidimensionalen Modells einer Filter-Vorstufe nach Anspruch 1 und Implementieren des dreidimensionalen Modells als Befehlssatz in einen dreidimensionalen Drucker;
Aufbauen, unter Verwendung des dreidimensionalen Druckers, der Filter-Vorstufe (10) durch Ablegen eines Materials in einem Schicht-für-Schicht-Prozess entsprechend dem Befehlssatz;
Beschichten der aufgebauten Filter-Vorstufe mit einer keramischen Aufschlämmung; und Kalzinieren der beschichteten Filter-Vorstufe.

## Revendications

1. Précurseur (10) pour un dispositif de filtration, comprenant :
au moins deux couches (20) d'élément filtrant, chaque couche (20) d'élément filtrant comprenant une pluralité de cages géométriques tridimensionnelles (22) reliées en relation fixe les unes aux autres, chaque couche (20) comprenant en outre un élément périphérique (26) qui entoure la couche ; et
une pluralité d'éléments d'espacement (28) qui s'étendent entre les éléments périphériques d'une paire de couches adjacentes, maintenant les couches en relation espacée fixe.

2. Précurseur de filtre (10) selon la revendication 1, dans lequel une pluralité des cages géométriques tridimensionnelles (22) d'une paire de couches adjacentes sont reliées en relation fixe les unes aux autres, maintenant les couches en relation espacée fixe.

3. Précurseur de filtre (10) selon l'une quelconque des revendications précédentes, dans lequel chacune des cages géométriques tridimensionnelles comprend une pluralité de segments linéaires d'un matériau reliés les uns aux autres sous la forme d'un solide géométrique, de telle sorte que chaque segment linéaire représente un bord du solide géométrique.

4. Précurseur de filtre (10) selon la revendication 3, dans lequel chacune des cages géométriques tridimensionnelles comprend vingt segments linéaires d'un matériau agencés sous la forme d'un octaèdre partiellement tronqué ayant des faces carrées supérieure et inférieure et huit faces trapézoïdales, les bords les plus longs des faces trapézoïdales définissant un équateur entre les faces carrées supérieure et inférieure, l'équateur ayant quatre bords et quatre sommets.

5. Précurseur de filtre (10) selon la revendication 4, comprenant en outre
une pluralité d'éléments de support linéaires (24), agencés en relation parallèle à travers la couche et subdivisant la couche en une pluralité de rangées ; de telle sorte qu'entre chaque paire d'éléments de support linéaires adjacents, une pluralité des cages ayant la forme d'un octaèdre partiellement tronqué dans chaque rangée sont reliées au niveau de l'équateur à chacun des éléments de support linéaires définissant la rangée.

6. Précurseur de filtre selon la revendication 5, dans lequel les cages ayant la forme d'un octaèdre partiellement tronqué, agencées le long de chaque rangée, sont en relation espacée par rapport à chacune des cages adjacentes.

7. Précurseur de filtre selon la revendication 5, dans lequel les cages ayant la forme d'un octaèdre partiellement tronqué, agencées le long de chaque rangée, sont reliées à chacune des cages adjacentes à celles-ci.

8. Précurseur de filtre selon la revendication 3, dans lequel chacune des cages géométriques tridimensionnelles comprend trente-six segments linéaires d'un matériau agencés sous la forme d'un octaèdre entièrement tronqué ayant six faces carrées et huit faces hexagonales.

9. Précurseur de filtre selon la revendication 8, dans lequel chacune des cages en octaèdre entièrement tronqué est reliée bord à bord à des cages en octaèdre entièrement tronqué adjacentes.

10. Précurseur de filtre selon la revendication 8, dans lequel chacune des cages en octaèdre entièrement tronqué est reliée face-à-face à des cages en octaèdre entièrement tronqué adjacentes, sur la base de faces carrées des cages respectives.

11. Précurseur de filtre selon l'une quelconque des revendications 4 à 10, dans lequel le matériau est un polymère thermoplastique approprié pour une extrusion à travers une tête d'impression d'une imprimante 3D.

12. Précurseur de filtre selon l'une quelconque des revendications 4 à 10, dans lequel le matériau est une céramique sous forme de pâte appropriée pour une extrusion à travers une tête d'impression d'une imprimante 3D.

13. Précurseur de filtre selon la revendication 11, dans lequel le polymère est un polymère acrylonitrile-butadiène-styrène (ABS).

14. Filtre pour filtrer un métal fondu, comprenant :
un précurseur de filtre selon la revendication 1 qui a été revêtu d'une pâte céramique et calciné.

15. Procédé de fabrication d'un filtre (110) pour filtrer un métal fondu, comprenant les étapes :
générer, sur un dispositif informatique, un modèle tridimensionnel d'un précurseur de filtre selon la revendication 1 et mettre en oeuvre le modèle tridimensionnel sous la forme d'un ensemble d'instructions sur une imprimante 3D ;
construire, à l'aide de l'imprimante 3D, le précurseur de filtre (10) par dépôt d'un matériau dans un processus couche par couche en fonction de l'ensemble d'instructions ;
revêtir le précurseur de filtre construit avec une pâte céramique ; et calciner le précurseur de filtre revêtu.
